# EUROPEAN PATENT APPLICATION

(11) **EP 4 414 656 A1**
(43) Date of publication of application: **14.08.2024**
(21) Application number: 23155419.7
(22) Date of filing: 07.02.2023
(51) Int. Cl.: G01B 5/012, B23Q 17/24, B23Q 3/155

(54) **TOOL RACK**

(71) Applicant: Hexagon Manufacturing Intelligence Sàrl, 1020 Renens (CH)
(72) Inventor: Ettelt, Dirk, 1324 Premier (CH); Meyer, Eric, 1196 Yens (CH); De Graffenried, Christian, 1616 Attalens (CH); Manetti, Davide, 1009 Pully (CH); Chardonnens, Julien, 1630 Bulle (CH); Chongkam, Sokha, 74100 Juvigny (FR)
(74) Representative: P&TS SA (AG, Ltd.)

(57) **Abstract**

Tool rack (100) for an automatic machine comprising a control unit (220) and a positioning platform (200) connectable to a plurality of tools, the tool rack having a linear guide (37), one tool station or more than one tool stations (90) connected to the linear guide (37) for receiving and/or providing at least one of said plurality of tools in an operating volume (240) of the positioning platform, a position transducer (98) for detecting a position of the tool station or at least one of the tool stations relative to the linear guide (37) and transmitting the position to the control unit (220).

## Description

### Technical domain

The present invention concerns a tool rack system for holding a set of interchangeable tools for an automatic machine. An important embodiment of the invention is a coordinate measuring machine with a rack holding a plurality of coordinate-measuring probes (hereafter also referred as "coordinate probes"). The invention can be applied also to other automatic machines such as a metalworking machine tool that can accept coordinate measuring probes from a tool rack for the control of the dimension or the position of the pieces that are produced, as well as to industrial robots that can load and unload interchangeable tools from a rack as herein disclosed and claimed, to 3D printers with interchangeable print head held in a rack, to numerical control (CNC) of machining tools with interchangeable tools, and to any other system comprising automatically interchangeable tools held in a rack.

### Related art

It is known to use automatic machines with a positioning platform that can unload and load automatically interchangeable tools from a rack. In the special application of dimensional metrology, the tools may be coordinate probes, contact probes (e. g. touch trigger probes, scanning or analogue probes) of different reaches and with various extensions, noncontact probes, such as optical probes, vision systems for the optical inspection of workpieces, such as cameras, surface status and roughness probes, and many others. Industrial robots can be configured to use such racks to change the tool at their business end, the modular tools stocked in the racks being measuring tools, prehension tools or other effectors. Similarly, metalworking machines may load measuring tools from a special rack for control purposes, besides the usual cutting tools.

The positioning platform on which the probe is mounted may be configured to orient the probe arbitrarily and automatically. This is rather common in the field of dimensional metrology, where the tools are often mounted on articulated head that is actuated automatically to orient the probe according to the needs of the measurement and to the measuring task at hand.

It is desirable that the probes may be attached to and released from the positioning platform in a dimensionally precise and repeatable manner. Several coupling systems that can be used automatically to this effect are known in the art. Tool loading and unloading operations must be executed carefully and gently, avoiding shocks and limiting contact forces as much as possible to preserve precision.

US 8535208, in the name of the present applicant, discloses a rack with several receptacles for holding a set of measurement probes for a coordinate measuring machine and several devices for reducing coupling and uncoupling stresses.

To meet market requirements, a cost-effective solution for providing a rack that can be easily reconfigured and accept tools in variable number and of various qualities. Utility model DE 9010591 U1 discloses a modular rack with a guide that can support a variable number of slidable tool units for a coordinate measuring machine. Each tool unit has a calibration element. The coordinate measuring machine determines the position of the tool units in its working volume by sensing the calibration elements of the tool units and, in subsequent loading and unloading operations, aligns the positioning platform with these predetermined positions to ensure a tool change without shocks. Document EP 0566719 discloses another modular probe magazine for a coordinate measuring machine. This magazine contains an arbitrary number of identical storage ports each connected to the adjacent ones.

A drawback of these known solutions is that, when the rack is configured or modified, for example by adding or moving one or more tool stations, the new configuration must be measured and recorded in the controller of the automatic machine, be it a coordinate measuring machine, a robot, a numerical controlled machining tool, or another kind of automatic machine. In coordinate measuring machines this operation is conventionally performed by equipping the machine with a touch probe and guiding manually the machine to feel stated reference points on the tool holders one after the other. The positioning of the tool rack in the operating volume of the machine must follow the rigorous specification of the manufacturer. Usually, the rack must be square with the principal axes of the machine and the rail carrying the tool station must be carefully levelled. Often non-identical tool holders are desired in the tool rack. This adds another level of complexity to the configuration since the exact nature of each holder must be recorded with the machine controller as well as his position.

All these necessary preparations represent costs, because they contribute to the unproductive time of the machine and must be carried out by skilled personnel. Moreover, as they involve several manual operations, they are prone to error.

### Short disclosure of the invention

An aim of the present invention is the provision of a tool rack system that overcomes the shortcomings and limitations of the state of the art. The tool rack of the invention has features that simplify considerably its installation in an automatic machine. The reconfiguration of the rack, whether it involves adding or changing the tool stations is especially simplified, thanks to the inventive features of the rack.

According to the invention, these aims are attained by the object of the attached claims, and especially by a tool rack for an automatic machine comprising a control unit and a positioning platform connectable to a plurality of tools, the tool rack having a linear guide (hereafter also referred as "track"), one tool station or more than one tool stations connected to the track, a position transducer for detecting the position of the tool station or at least one of the tool stations relative to the track and transmitting the position to the control unit of the automatic machine; wherein said one tool station or more than one tool stations is located in an operating volume of the positioning platform so as to receive (from the automatic machine) and/or provide (to the automatic machine) at least one of said plurality of tools.

The control unit of the automatic machine is any controller configured to control operations of the automatic machine and to issue commands required to load and unload the tools preferably according to a desired plan.

The tool station or the more tool stations can be statically, preferably at least temporarily located in the operating volume of the positioning platform, or alternatively temporarily located in the operating volume only during the tool reception and/or tool provision. In a particular embodiment, the linear guide is located within the operating volume of the positioning platform.

The invention is also embodied by a station for holding a probe for an automatic machine, comprising : a mechanical connector configured to connect the station onto a track, a position transducer for detecting the position of the tool station or at least one of the tool stations relative to the track, and a digital communication interface configured to transmit the position to a digital controller of the automatic machine.

The invention concerns also a method of changing a tool in an automatic machine, the automatic machine having a positioning platform connectable to one of a plurality of tools, the method comprising : providing a tool rack in an operating volume of the machine that is reachable by the positioning platform, the rack having a track with one tool station or a plurality of tool stations connected on the track and a position transducer or a plurality of position transducers for detecting the position of the tool station or at least one of the tool stations relative to the track and transmitting the position to the automatic machine (notably to the control unit of the automatic machine), selecting a tool held in a tool station, acquiring (e.g. prompting. collecting, or receiving) a position of the selected tool station, moving the positioning platform to the position of the selected tool station, and connecting the selected tool to the positioning platform, wherein acquiring the position of the selected tool station includes reading the position transducer or plurality of position transducers of the tool rack. This method allows an easier use and install of the tool rack for operating with an automatic machine.

Dependent claims introduce important and useful, but not essential, optional features. Among these are a digital scale running along an axis of the track while the tool station(s) have a reader configured to read a position from the scale and a data interface sending the position to the control unit. The scale may carry a positioning code defined by a pattern of variations of conductivity, magnetization, magnetic reluctance, optical reflectivity or transmissivity, or any other suitable quantity that is readable by the reader of the tool station. Preferably the code is an absolute positioning code. Ambiguities linked to the transitions in the code can be avoided by a reader that can acquire two spaced positions along the scale and take corrective actions, when the two positions do not correspond, which could involve activating a predefined procedure, generating, inhibiting, or modifying a signal, thus prompting the operator to reposition the tool station in a non-ambiguous position.

The position may be determined by an analog transducer rather than by a digital one. It may derive from a measure of a quantity that changes continuously along the track's axis, for example a voltage dropping linearly along a resistive track.

Alternatively, the position is determined by a position transducer comprising: a camera for capturing an image of the tool rack (capturing at least a portion of the tool station and of the linear guide), and an image processing circuit for processing the image to provide a position of the tool station relative to the linear guide.

The resolution in the determination of the position of a tool station along the track will be congruent with the precision required for loading and unloading tools safely. Alternatively or complementarily, the determination of the position of a tool rack along the track will be congruent with the precision required by the automatic machine for automatic determine an accurate position of the tool station by means of a coordinate-measuring probe advantageously connected to the position platform, so as to improve the position provided by the tool rack. The precision can be better than 5 mm, preferably, it will be better than 3 mm or, more preferably, better than 1 mm. The length of the track may be arbitrary but, in most cases, it will be comprised between 300 and 1000 mm, in which case the fractional resolution would be better than 0.3 percent of the length, or preferably better than 0.1 percent the length.

The position transducer in the tool rack provides a position of each tool station relative to the tool rack itself, while the coordinate machine works in its own coordinate reference system. The position of the tool rack in the machine coordinate system can be obtained by equipping the coordinate machine with a coordinate probe and determining the position of reference elements provided on the rack to this effect. Knowing the placement of the rack, one can translate from one system of coordinates to the other. The coordinate probe of the machine can be a contact or contactless coordinate probe, notably a touch probe.

The resolution offered by the position transducer in the tool rack may not be enough for delicate high-precision tools, like touch probes for CMM. In this case, the coordinate machine carries out a refinement process in which the position of each individual probe station is determined exactly, by sensing (e.g. touching, perceiving or seeing) the reference elements that are foreseen to this purpose in each station with a coordinate measuring probe (e.g. touch probe, contactless probe). Differently from the prior art, the machine has an approximate position of each tool station automatically, and thus the whole measurement can be carried out automatically, notably driven by the control unit of the automatic machine. The reference elements can also be sensed by means of an image system comprising a camera mounted on the positioning platform or, alternatively or complementarily, on a fixed or mobile portion of the automatic machine.

The automatic machine used with the rack of the invention could be a coordinate measuring machine (with a bridge structure, an articulated arm structure, or of any other kind), an industrial robot, a numerical controlled (CNC) machine tools or metalworking machine with interchangeable tools, such as lathe, milling machine and machine centre. The automatic machine can be also an additive fabrication machine. The following of this document will refer mostly to embodiments of the invention in a coordinate measuring machine (CMM in short) of the bridge type, for concision, but this does not exhaust the scope of the invention, though. As mentioned above and reiterated in the claims, the invention is applicable to any form of machine involving an automatic position and a plurality of interchangeable tools.

The tools stored in the inventive rack and used in the automatic machine can be of any nature: coordinate probes, as will be shown in the example, video cameras, surface status probes, and more. The tool stored in the tool rack can also be an articulated coordinate probe for providing an orientation, a re-orientation, and/or a rotation of a measuring portion of the coordinate probe along at least a rotational axis with respect to the position platform of the machine when releasably attached to the position platform. The articulated coordinate probe can thus integrate a rotary joint, or alternatively being in form of a coordinate probe being releasably connected to an articulated probe head that provides such orientation, re-orientation, and/or rotation.

Preferably, the tool rack may be fixed to a reference table that also supports the workpieces that are to be measured, examined or processed in the operating volume. The tool rack can thus be equipped with at least one upright, preferably with more uprights carrying the track have each a base with a fastener and the table has a lattice of holes at predetermined positions compatible with the fasteners of the bases of the uprights. When it is fixed in this fashion, the position of the rack in the operating space of the machine is necessarily one of a limited set of indexed positions, and the operator can record this information into the machine controller easily, without measurements, and with no risk of errors. Again, the position of the rack can be refined, if necessary, by a short and automatic probing of reference points foreseen to this purpose. Advantageously, the tool rack can have a plurality of tracks (i. e. linear guides) on which one or more tool stations can be connected, preferably such tracks being parallel one with respect to another. In such configuration, uprights supporting a different track can share the same base for facilitating the fixing on the reference table while providing an accurate positioning of the tracks, without measurements, and with no risk of errors.

Furthermore, to simplify the use and the operation of the tool rack, the tool station of the invention is preferably configured to transmit to the controller also an identification code designating a type of the station, a unique identification of the station, an occupancy signal (e.g. code or message) for indicating a tool loaded in the tool station (i.e. an occupancy status of the tool station), and/or an identification code designating a type of tool loaded in the tool station and may have an actuator controlled by commands received by the communication interface for assisting in connecting and disconnecting a tool with a positioning platform of an automatic machine. This information allows the automatic machine to manage tool changes and usage - as well as tool maintenancesaccording to workpiece design and measurement plans. The tool station can thus be equipped with an (occupancy) sensor configured to detect: a tool being loaded in the tool station, a distance of an approaching/leaving tool (e. g. a distance between the tool station and the tool connected to the positioning platform), and/or a type of tool loaded in the tool station. The sensor can also be configured to provide (e. g. sense or collect) additional information about the tool loaded in the station, such as an identification code designating the type of tool, a unique identifier of the tool, health status, and/or operational data. These data can be transmitted to the automatic machine notably for further supporting tools usage management and maintenance.

The rack can comprise a distance sensor for sensing a distance between the tool rack and the coordinate-measuring probe and/or the positioning platform of the automatic machine. The rack can be thus configured to provide this distance to the automatic machine for allowing rack's positioning and/or alignment determination, preferably in an automatic way.

The claimed method may include steps of connecting a coordinate-measuring probe to the positioning platform, improving a position of a tool station by determining coordinates of one or more reference elements of the tool station with the coordinate measuring probe. In a preferred method, the step of determining coordinates of reference elements is automatically executed by the automatic machine (i.e. with no intervention of an operator) based on the position provided by the position transducer or the plurality of position transducers of the tool rack. The method can, alternatively or complementarily comprises a step of determining a position and/or an orientation of the track by measuring positions of reference elements of the tool rack with the coordinate measuring probe. Alternatively, the position and/or the orientation of the track can be determined by processing an image of the tool rack by a camera, the camera being for example located on a fixed or mobile portion of the automatic machine or of another structure within or near the working volume of the automatic machine.

With respect to what is known in the art, the invention provides the advantage that each reconfiguration of the rack, whether it includes moving, adding, removing or changing tool stations, is directly known by the machine controller. In many use cases, this automatic transmission is all that is needed, and the machine can carry out productive tasks immediately after the material reconfiguration of the rack. When necessary, the configuration of the rack can be refined by an automatic coordinate probing procedure with a minimum of specialized human interventions and can be limited to the tool stations that have changed.

An independent object of this document is a coordinate measuring machine with a tool rack supported by two uprights on a reference table of the machine, wherein the uprights have each a base with a fastener and the table has a lattice of holes at predetermined positions compatible with the fasteners of the bases of the uprights. It is advantageous that this tool rack can be installed only in a finite number of positions on the table that are known *a priori*: when the machine is configured, the operator needs not to painstakingly align and level the rack with the machine axes. They only need to screw the rack in one of the available positions and inform the controller of the machine about the chosen position of the rack. This choice among a limited number of available positions is limited can be implemented as a menu on a GUI of the controller and no measurement of dimensions is required. Complementarily, the machine can be configured to verify the alignment of the tool rack by automatically reading the distances provided by distance sensor of the tool rack when moving the coordinate-measuring probe near the two extremities of the tool rack.

The controller can then acquire the exact position of the rack by sensing or touching appropriate reference structures of the rack with a coordinate probe. Thanks to the knowledge of an approximate position a *priori,* this can be completely automated.

This independent object is regarded as a separate independent invention and can be combined, if desired, with all the improvements relative to the position encoder in the track disclosed in this document.

In this document, the terms "horizontal ", "vertical", refer to the conventional orientation of elements in a coordinate measuring machine but, unless specially claimed, these terms in the disclosure do not limit the invention. In particular, the embodiments presented will show a rack with a horizontal track supported at the end by two perpendicular uprights below the track. This customary configuration is not the only one possible, however, and some use cases may require a rack mounted upside-down, vertically, or in another disposition, without leaving the inventive scope.

The terms "tool station", "tool holder", "tool unit", "receptacle", "station" may be used interchangeably to designate any device configured for holding a tool in a stated position, from where it can be taken by the movable end of the positioning machine and used.

The terms " digital controller", "controller", "control unit", may be used interchangeably to designate any device configured to control operations (such as machining, measurements) of the automatic machine.

The terms "rack", "rack system" and "tool rack" are interchangeable used in the description of the invention.

In all the examples and embodiments that involve tool stations connected to a track, the tool stations have a mechanical connector that interact with a profile on the track in such a way that the position of the station is constrained on a line parallel to the track's axis, the tool stations perpendicular to the track. The invention comprises both realization in which the tool station can slide along the track and those where the station can connect to the track only in in a finite number of indexed positions. Preferably, the tool station and/or the track have locking means to prevent further displacements of a tool station once it has been placed in a desired position.

### Short description of the drawings

Exemplar embodiments of the invention are disclosed in the description and illustrated by the drawings in which:
Figure 1 illustrates schematically a tool rack with two tool stations
Figure 2 shows a tool station disconnected from the tool rack
Figure 3 shows in detail and in idealised fashion a connection between the tool station and the tool rack
Figure 4 is a detail of the tool rack showing a sliding track for the tool stations and a digital scale
Figure 5 shows the tool station in relation to the sliding scale of the rack
Figure 6 shows the top side of the tool station from above, and a reader compatible with the scale in the rack.
Figure 7 shows the tool rack in a coordinate measuring machine
Figure 8 is an example of a different kind of tool station;
Figure 9 illustrates a multi-beam tool rack with tools stations.

In the figures, remarkable elements are identified by reference signs that are repeated in the text. The same reference sign is used to identify distinct elements that are identical or functionally equivalent. When many instances of an element are present, some reference signs may have been omitted to avoid overcrowding the figures.

### Examples of embodiments of the present invention

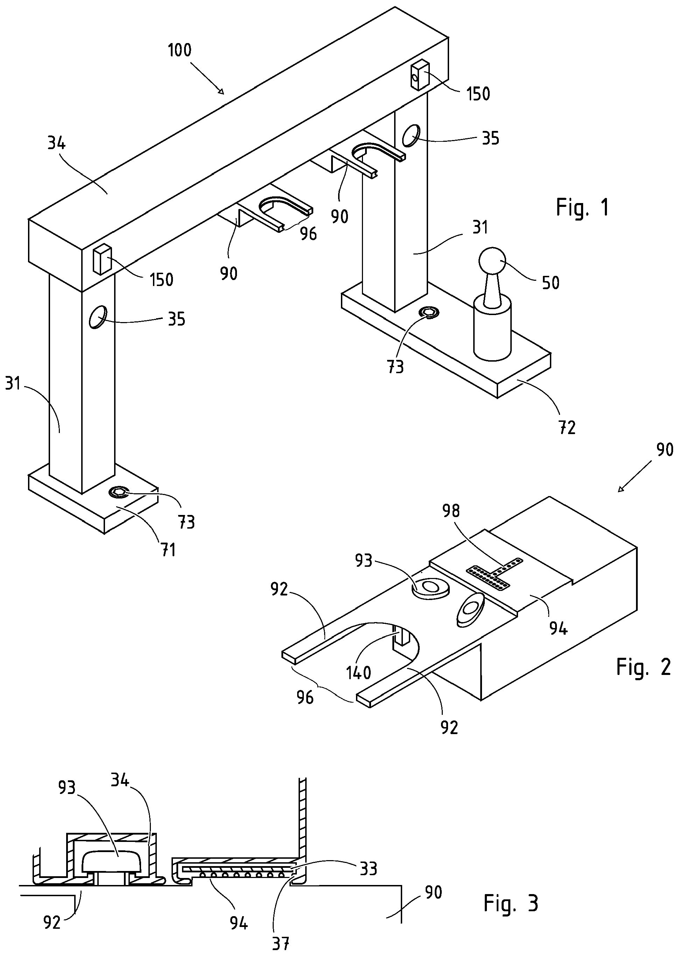

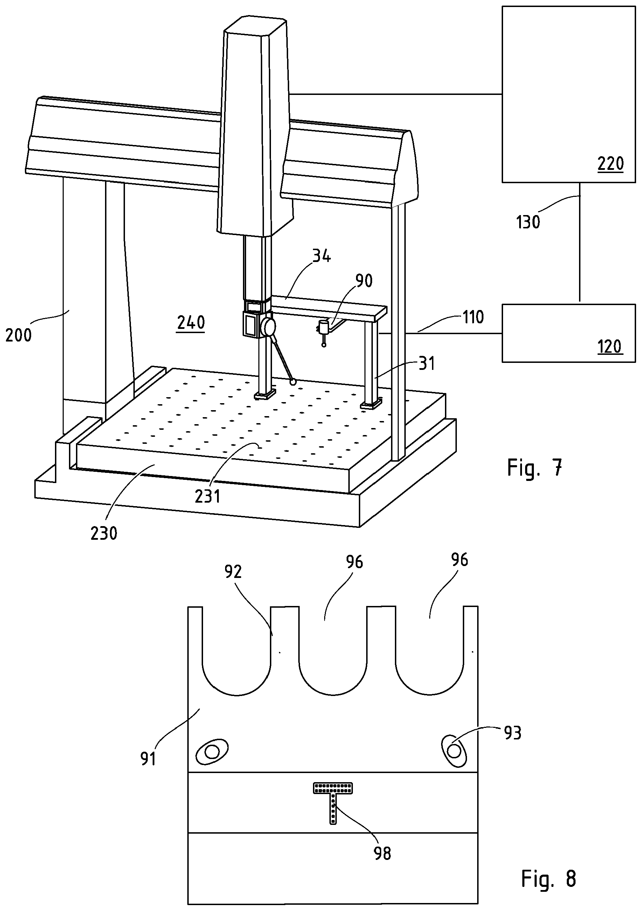

**Figure 1** show an example of the tool rack **100** of the invention. The device is customarily configured to stand fixed on a flat surface **230,** for example the reference table of a coordinate measuring machine (as in figure 7, for example). The connection may be realised by clamping the feet **71, 72** to the table, as it is customary.

The tables **230** of coordinate measuring machines often have a lattice of threaded holes **231** at predefined positions, and it is preferable that the tool rack be designed to interoperate with the existent holes. In an advantageous variant, the feet **71, 72** are equipped with holes or similar features to lodge a bolt or a fastener **73,** and the distance between said holes or similar features is a multiple of a periodicity of the lattice, such that the rack can be screwed to the table very simply and reliably.

The tool rack **100** is not necessarily used on a flat and horizontal surface. Conceivably, it could be mounted on a vertical element of a measuring machine, or on a shelf, and it could be arranged horizontally, as represented, vertically, upside-down, or in any useful way. This disclosure will treat only the more usual arrangement in which the rack rests on a horizontal table for brevity, and expressions like "horizontal" and "vertical" may be used in reference to that conventional orientation, but they should not be construed as limitations of the invention.

The tool rack has a horizontal elongated beam **34** that is held separate and parallel to the base by two vertical uprights **31.** The horizontal element can have a variable number of tool stations **90,** each configured to hold a tool. In the disclosure, the tool stations **90** will often be represented as identical, but this is not generally the case, and the tool stations may be configured in different ways according to the nature of the tools that they are destined to hold, while retaining the compatibility with the tool rack **100.**

Some tool stations (not illustrated) of the tool rack **100** can be configured - in alternative or in complement to the function of holding one or more tools- to provide one or more (others) given functions, e.g.: cleaning a tool, charging a power source of a tool, powering a tool, and/or thermal management of a probe.

The tool rack **100** can thus comprise a tool station being further configured to clean a probe when reposed in one receptacle of the station, and/or a dedicated tool cleaning station being configured to clean a probe when located in proximity or in contact with the cleaning station (e. g. in a cavity or overture of the station) by the automatic machine. The cleaning can rely on spraying or applying a cleaning product in liquid and/or gaseous form, e. g. by means of one or more nozzle(s), chamber(s), and/or baths.

The tool rack **100** can thus comprise a tool station being further configured to power an electrical circuit or component of a tool and/or to charge a power source of a tool when the tool is reposed in one receptacle of the station. Alternatively, or complementarily, the tool rack **100** can comprise a dedicated tool powering and/or charging station being configured to power and/or charge the tool when located - means of the automatic machine- in proximity or in contact with the station. The charging process can be operated by the station in a wired and/or wireless mode.

The tool rack **100** can thus comprise a tool station being further configured to manage a temperature of a tool when the tool is reposed in one receptacle of the station. The station can be provided with a detector or sensor for determine a temperature of the tool to provide temperature management. Alternatively, or complementarily, the tool can be configured to transmit a temperature reading to the station for allowing such management. The station can maintain or modify the temperature of the tool by:
selectively activate a cooling or warming element of the station in such way to cooling or warming the tool; and/or
selectively triggering a power or powering an active circuit of the tool, the active circuit of the tool being configured to cool or warm the tool.
Alternatively or complementarily, the tool rack **100** can comprise a dedicated tool thermal managing station being configured to thermally managing a probe when located - by means of the automatic machine- in proximity or in contact with the station.

An advantageous aspect of some embodiments is the ease of assembling the tool rack **100** in the coordinate machine. The tool rack preferably includes positioning means that allow the determination of its position in the coordinate space with a minimum of manual operations. These may include a touch trigger probe **50** and accurate referencing features, such as the holes **35.**

**Figure 2** shows in simplified fashion a tool station, from above. The tool station **90** is configured to hold a tool in such a way that a coordinate machine can recover the tool from the station **90** and leave it into the station when needed. In the example shown, the tool station has a single tool receptacle 96 formed by two parallel arms **92** that are configured to interoperate with a circumferential groove in a tool that has a cylindrical body, as it is the case for many touch probes, but this is not a limitation of the invention, which is not limited to a specific kind or shape of tools. **Figure 8****,** shows, to make just an example, a tool station that can hold three identical tools, e. g. by a plurality of tool receptacles **96** formed by a plurality of parallel arms **92.**

Many tools can be safely slid in and out of a tool station by the coordinate machine alone without assistance. Springs or magnets are often used to hold the tool in this kind of passive tool stations. It is often preferable, however, that the tool station includes one or more effectors that positively retain the tool in place and/or locks the tool to the arm of a coordinate machine when required. The invention explicitly includes active and passive tool stations.

Referring again to figure 2, the tool station has further a connector **94** that is configured to interact with a linear guide **37** of the beam **34** in such a way that the tool station can be mounted orthogonal to the longitudinal axis of the beam **34,** in a desired position. In the example shown, the connector is a protruding region, and the linear guide is an elongated recess on the underside of the beam. Insofar as the width of the recess and that of the protrusion correspond - with the necessary tolerances - the tool station can be mounted only orthogonal to the beam's axis and can slide in any desired position. **Figure 3** shows the arrangement in section. The linear guide **37** is advantageously aligned with the longitudinal axis of the beam **34,** notably for reducing the operational volume loss of the automatic machine and for easily the installation of the tool rack. Other forms of connection, guiding and sliding are possible, however.

The tool station **90** can slide along the linear guide and be mounted in an infinity of positions, always orthogonal to the beam **34.** In a possible variant, however, the connection between the tool station and the beam may be possible only at a finite, albeit sufficiently large, number of positions, for example regularly spaced.

The tool station is held solidly in place on the rack by turning one or more catches **93** such that they engage with the profile **34,** for example. When the tool station is in place, a reader head **98** of the tool station is juxtaposed to a circuit board **33** fixed to the beam. This enables several functions of the tool station **90,** as it will be explained later.

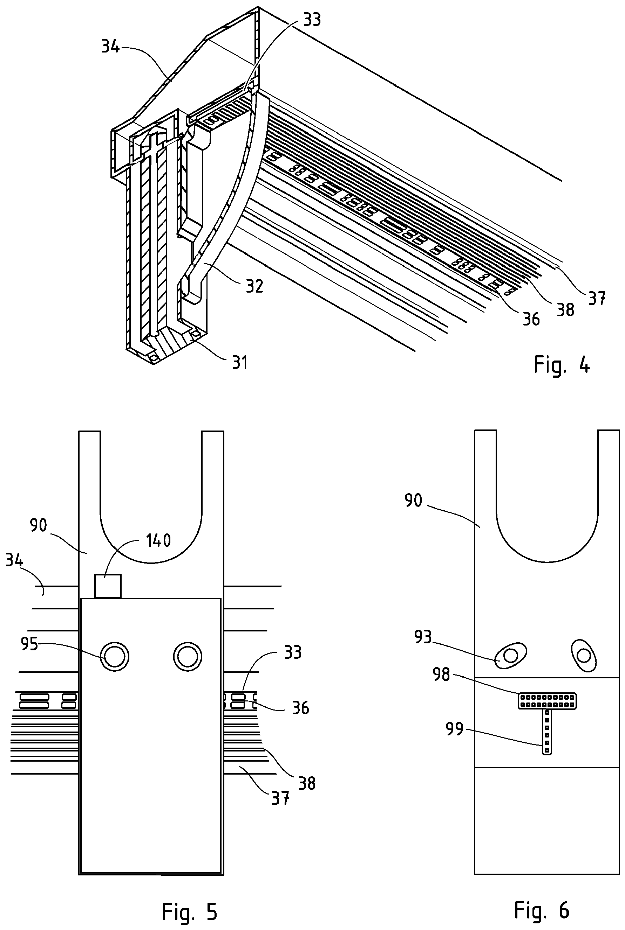

Even if the illustrated tool stations are always equipped with two catches **93,** a single catches **93** can be sufficient to held in place a tool station holding a single tool as such of **Figure 2****,** where two or more catches can be used to held in place tool stations holding a plurality of tools, such as the tool station of **Figure 8****.** **Figure 4** shows the beam **34** from below and one of the uprights **31,** in section. The circuit board **33** has, in this example, a digital scale **36** and power and bus lines **38.** Lines **38** run continuously parallel to the axis of the beam, provide the tool station with electric power and/or serve to exchange data between the tool station and a control unit. The digital scale **36** is patterned according to a positioning code and permits the determination of an absolute positioning code along the axis. The bracket **32** is used to stiffen the structure and guide the necessary cables.

**Figures 5 and 6** show the tool station **90** in relation to the beam **34** from below respectively alone and from above. Holes **95** allow to turn the catches **93,** for example with a screwdriver or a hex key.

To receive power and data, the tool station **90** has a plurality of sliding contacts **99** aligned each with one of the power and bus lines **38.** The invention also admits variants in which the tool stations are battery-powered and/or the data interface between the tool stations **90** and the control unit is wireless. In these, some or all the power and bus lines **38** could be dispensed with.

The reader **98** in the tool station comprises a plurality of sliding contacts arranged in two horizontal rows, that are aligned with the digital scale **36.** The tool station **90** comprises a position encoder configured to determine, though the resistance or the voltage level seen at each of the contacts, a position along the scale **36.** The code used is preferably absolute, and the tool stations **90** can determine their position along the beam without immediately as soon as they are powered up, without zeroing.

Even if the illustrated reader **98** relies on a plurality of sliding contacts sensing the pattern of variation of the conductivity of the digital scale **36,** other arrangement of the reader and the scale are possible. The reader may comprise inductive sensing elements (e. g. eddy current sensing element) for sensing the pattern of variation of the conductivity. Alternatively, or complementarily, the scale may carry a positioning code defined by a pattern of variations of magnetization, magnetic reluctance, optical reflectivity or transmissivity, or any other suitable quantity that is readable (i.e. being sensed) by the reader of the tool station.

Alternatively, the position may be determined by an analog transducer rather than by a digital one. This may be achieved through the measurement of a quantity that changes continuously along the track's axis, for example a voltage dropping linearly along a resistive track.

Alternatively, the position may be determined from a captured image of the tool rack. A possible implementation of this concept involves a position transducer comprising a camera for capturing an image of the tool rack (e. g. the image comprising at least a portion of the tool station and/or the linear guide), and an image processing circuit for processing the image to provide a position of said tool station relative to the linear guide. The linear guide can further be provided with camera-visible marks for helping the analysis of the image, for example in the form of a regularly spaced pattern, graduated scale or rule.

The reader **98** can be powered trough some sliding contacts **99** aligned with lines **38** providing electrical power. Alternatively, or complementarily, the reader can be powered trough some sliding contacts **99** aligned with lines **38** providing electrical power. Alternatively, or complementarily, the tool station may be battery-powered, and the reader could be powered by a battery of the tool station.

In the illustrated example, the digital scale **36** is replicated in two copies, with a slight horizontal shift between the copies. The shift may be, for example, half of the pitch of the pins in the reader **98.** The position encoder determines two positions along the scale that are spaced by a small amount and generates a signal when they do not correspond. In this way, ambiguities due to transitions in the code are avoided.

The printed scale shown in this example can find the position along the beam with a resolution that is better than 0.3 mm, or about 1/1000th of the length of the beam, which is more than adequate for this application. This is not the only possibility, however. The scale 36 could be embodied by a magnetic scale, an inductive scale, or an optical scale, or by any other known digital scale, read by a suitable reader in the tool station.

The tool rack can be equipped with one or more sensors for detecting tools being loaded in one of the tool stations and preferably the type of tool. This variant of the invention may be configured to determine an occupancy status of the tool rack and/or of the individual tool station and share it to the controller 220 of the main apparatus. More advantageously, the tool rack can be equipped with one or more sensors for also detecting an approaching/leaving tool (i. e., a tool moved by the positioning platform near the tool rack).

The tool station of **Figure 2** comprises an occupancy sensor **140** that can assess the occupancy status of the tool station, notably the number of free and/or occupied tool receptacles **96** of the tool station, advantageously the type of the loaded tools located in the one or more receptacle **96.**

The occupancy sensor **140** can thus be configured to detect: a presence of a tool in each receptacle **96** of the tool station, a distance between a receptacle **96** and an approaching/leaving tool, and/or a type of each tool located in the one or more receptacle **96** of the tool station. **Figure 7** shows a tool rack **100** in the operating volume of a coordinate machine **200** (i. e. in the volume reachable by the tool mounted on the positioning platform). Control unit **220** controls the operations of the coordinate machine and issues the commands required to load and unload the tools and perform a measurement according to a desired plan. The tool rack **100** communicates with the control unit **220** through an interface **120,** a data and power cable **110** and a data link **130** that could be a network connection, for example on an Ethernet cable. The interface **120** can have one or more circuits board(s) with electronics circuits for collecting data (e.g. from the bus lines **38** , from the touch trigger probe **50),** a processing unit (e.g. digital microprocessor, FPGA) for processing and transmitting such data to the (control unit of) the automatic machine trough the data link **130,** a communication module for transmitting and/or receiving data to/from the control unit **220** of the automatic machine (in a digital and/or analogue form), and preferably a memory for storing collected data and/or processing unit's data and programs.

This configuration is not the only one possible, however, and some use cases may require a tool rack mounted upside-down, vertically, or in another disposition, without leaving the inventive scope. If the entire operating volume of the automatic machine is needed, the tool rack may be configured to (temporarily) place the tool stations (eventually also the linear guide **37)** in the operating volume only when necessary, during operations of tool exchange, tool loading on a tool station, or tool connection to the positioning platform.

The tool rack **100** (notably the tool stations thereof) is advantageously configured to transmit the detected positions of the tool stations to the controller unit **220** for simplifying the installation of the tool rack, e. g. the operability of the tool rack with the automatic machine. In the illustrated embodiment, the interface **120** can thus be (data) connected to the bus lines **38** for collecting the positions detected by each position transduces **98** of each tool station **90** and configured to transmit the collected positions to the control unit **220.**

More advantageously, the tool rack (notably the tool stations thereof) can be configured to transmit though the interface **120,** not only the position of each tool stations but also additional data provided by the (occupancy) sensor **140** of each tool station, for example the identification codes designating the type of the tool station, a unique identification of the station, an occupancy signal (e.g. code or message) for indicating an occupancy status of the tool station, and/or a distance of an approaching/leaving tool.

The type of the tool station can (implicitly or explicitly) comprise an indication of an active tool station, e. g. having an actuator that can be controlled by commands received by (the communication interface of) the tool rack, for example, for assisting in connecting and disconnecting a tool with a positioning platform of an automatic machine. Another example of active station is a cleaning station that comprises actuators for operating a cleaning of a tool extremity located inside or near the cleaning station, such actuators being controlled by commands received by (the communication interface of) the tool rack.

The additional data provided by the sensor **140** of the station **90** can also comprise information about the tool loaded in the tool station, such as an identification code designating the type of tool, an unique identifier of the tool, health status (temperatures of the tool, circuit functionality and ageing status, memory usage, battery status, battery charge, tool wear status, etc), and/or operational data (e.g. accumulated number of triggering and/or sensing, accumulated operating time, etc) . The sensor **140** can thus be configured to (wireless and/or by wire) connect the tool, notably a circuit thereof, for collecting such information. In one embodiment, the sensor comprises a radio frequency (RF) communication circuit. These data can be transmitted to the automatic machine notably for supporting tools usage management and maintenance.

The rack can also comprise one or more than one distance sensors **150** for sensing a distance between the tool rack (e. g. the linear guide **37** or the horizontal elongated beam **34)** and the positioning platform and/or the coordinate-measuring probe.

The tool rack can be configured to transmit -though the interface **120** - the distance provided by the sensor **150** for allowing the automatic machine to automatically verify - by means of the positioning platform and/or the coordinate-measuring probe mounted on the platform- a correct alignment of the tool rack (i.e. parallelism with automatic machine axes), notably of the horizontal elongated beam **34,** and of the linear guide **37,** in view of providing automatic tool exchange.

In **Figure 1****,** the distance sensor **150** comprises an optical emitter and receiver being located at opposite positions on the horizontal elongated beam **34** for providing a distance between the coordinate-measuring probe mounted on the position platform and the elongated beam **34** to sense a distance being perpendicular to the horizontal elongated beam **34.** The optical emitter and receiver of the illustrated distance sensor **150** can alternatively mounted on the vertical uprights **31** of the tool rack.

The illustrated tool rack is advantageously configured to transmit -though the interface **120** - the trigger signal provided by the touch trigger probe **50.** The automatic machine can use this trigger signal to determine not only positioning of tool rack, but also relative positioning of components of the positioning platform and/or of the connected tool.

The tool rack **100,** notably one or more tool station(s) **90, 91,** can comprise an environmental sensor for sensing an environmental parameter, notably an environmental temperature, humidity, air flow, or atmospheric pressure. The environmental sensor can be configured to sense a contact with a solid object, such as a tool moved by the automatic machine or even a human member, such as an upper member, a hand or a finger of an operator of the tool rack **100** or of the automatic machine **200.**

The tool rack **100,** notably one or more tool station(s) **90, 91,** can alternatively or complementarily comprise a health sensor for sensing an operational status of the tool station, the tool rack **100,** the automatic machine **200,** and/or of one or more tool(s) of the automatic machine. In particular, the environmental sensor can be configured to sense a physical quantity (such as an electrical and/or magnetic wave or signal, a temperature, a movement, an acceleration, a vibration, acoustic or optical waves) related to a component or circuit of the tool station, the tool rack, and/or of a tool located in or near a tool station of the tool rack.

The tool rack can be advantageously configured to transmit - though the interface **120** - signal and/or data provided by the environmental and/or health sensor to the (controller of the) automatic machine.

The above-described information that are provided by the tool rack **100** - notably though the interface **120** - to the automatic machine **200** can be used -by the automatic machine, e.g. by means of the controller 220, and/or by an external device being remotely connected to the automatic machine - for automatically optimising and verifying probe exchanges, triggering and/or planning predictive maintenance for the tool rack and/or tools, and/or for establishing (usage) statistics related to the tool rack and/or the tools.

The assembly and mounting of the tool rack **100** on the measure table may include some or all the following steps in any suitable order:
- An operator mounts several tool stations **90** on the rack **100** as required by the measuring plan that should be carried out. The tool stations are positioned by hand without measuring or recording their position on the beam.
- The tool rack is fastened to the table using the tapped bores thereon.
- The control unit **220** executes a stored calibration program of the tool rack whereon.
   ∘ The operator selects, on a computer-generated representation of the table, the bores chosen for fastening the tool rack.
   ∘ If needed, the operator chooses, from a list of possible values, the height of the uprights **31.**
   ∘ The calibration program deduces the height and width of the tool rack and an approximate position of the tool rack on the table.
   ∘ The calibration program operates the coordinate machine and determines a precise position of the tool rack by measuring the reference features **35** on the uprights with a touch probe, using the approximate position to determine a suitable approach trajectory.
   ∘ The calibration program interrogates the tool stations **90** and for each tool station reads an identifier of the station type, and the position along the beam **34,** as provided by the position transducer.
   ∘ In a variant, the tool station may be configured to exchange data with the tool that is stored in the station. An identifier of the tool type and/or an individual tool identity are communicated to the calibration program.
   ∘ The calibration operates the coordinate machine and determines a precise position of each of the tool stations by measuring the tool stations with a coordinate probe (notably a touch probe), using the approximate positions and kinds of each tool station to determine suitable approach trajectories.
   ∘ The position and configuration of the tool rack are now completely determined, the measurement can start.

Advantageously, the above procedure does not include manual measurement or calculations, and can be executed quickly and safely, without risk of collisions or manual errors. The control unit may be configured to execute also incremental calibration, for example to update the configuration when a single tool station is changed or moved, without altering the position of the tool rack or of the other stations.

Complementarily, the machine can be configured to verify the alignment of the tool rack by automatically reading the distances provided by distance sensor **150** of the tool rack when moving the coordinate-measuring probe near the two extremities of the tool rack. Alternatively or complementarily, the alignment and/or the positioning of the tool rack can be determined or verified by measuring positions of reference elements of the tool rack by processing an image of at least a portion of the linear guide captured by a camera, or by sensing, by means of the distance sensor **150** of the tool rack, a distance between the tool rack and the coordinate-measuring probe and/or the positioning platform thereof.

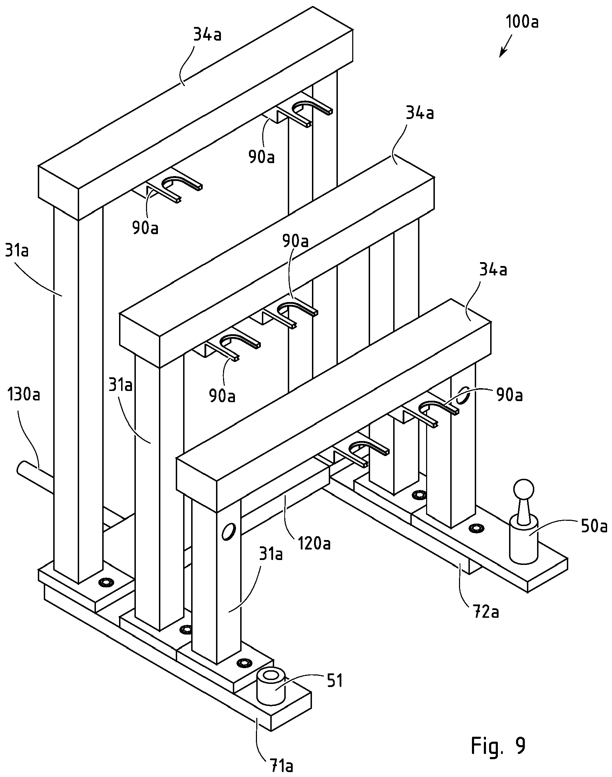

The tool rack can have a plurality of beams for supporting more tool stations. **Figure 9** illustrates an embodiment of a tool rack **100a** with a plurality of beams **34a** on which a plurality of the above-described tool stations **90** can be located. Like in the tool rack of **Figure 1****,** each beam **34'** has a linear guide **37** and allows a tool station to be mounted orthogonal to the longitudinal axis of the beam **34a,** in a desired position. Advantageously, the linear guides and the beams are parallel one with respect to another.

The multi-beam tool rack **100a** can advantageously configured not only to provide positions of connected tool station(s) to the control unit of an automatic machine, the positions being relative to the linear guide of the beam to which the tool station is fixed, but also an identifier of the related beam in addition to each position, as to facilitate the installation of the multi-beam tool rack.

The beams **34a** are supported by upright **31a** while uprights supporting a different beam can advantageously share the same base, i.e. foot **71a,72a** so as to facilitating the fixing on a flat surface, such as a reference table of a coordinate measuring machine, notably by clamping the feet **71a, 72a** to selected threaded holes of the table for providing an accurate positioning of the all the tracks, without measurements, and with no risk of errors.

As the tool rack of **Figure1****,** the multi-beam tool rack **100a** can communicates with the automatic machine through an interface **120a** being linked to the control unit of the machine by a data link **130a.** In the illustrated embodiment of **Figure 9****,** the interface **120a** is advantageously located inside a casing positioned between the two feet **71a, 72a.** The interface **120a** is then linked to the power and bus lines of each beam by means of cables preferably passing through internal cavities of the uprights. This arrangement provides an adequate protected volume for locating the interface without affecting the operating volume of the automatic machine.

In the illustrated exemplary embodiment of the multi-beam tool rack **100a,** one feet supports a touch trigger probe **50a** (similarly to the embodiment of Figure 1) at a known position for providing positionings of mobile components (such as the mobile platform of the automatic machine), while the other feet supports a cleaning station **51.**

According to the invention, the multi-beams tool rack **100a** allows an easy use and installation for operating with an automatic machine, notably by some or all the following steps in any suitable order:
- An operator mounts several tool stations **90a** on one or more beams of the multi-beam tool rack 100 as required by the measuring plan that should be carried out. The tool stations are positioned by hand without measuring or recording their position on each beam.
- The tool rack is fastened to the table using the tapped bores thereon.
- The control unit of the automatic machine executes a stored calibration program of the tool rack whereon
   ∘ The operator selects, on a computer-generated representation of the table, the bores chosen for fastening the tool rack;
   ∘ If needed, the operator chooses, from a list of possible values, the tool rack configuration, notably including the number of beams and the height of the relatives uprights;
   ∘ The calibration program deduces the height and width of the tool rack and an approximate position of the tool rack on the table;
   ∘ The calibration program determines a precise position of the tool rack using the approximate position to determine a suitable approach trajectory, according to one of the above-described way;
   ∘ The calibration program collect, for each tool station, an identifier of the station type, the position along the beam, as well as the identifier of the beam, according to one of the above-described way;
   ∘ The calibration operates the coordinate machine and determines a precise position of each of the tool stations, according to one of the above-described way;
   ∘ The position and configuration of the tool rack are now completely determined, the measurement can start.

As already described, the installing procedure does not include manual measurement or calculations, and can be executed quickly and safely, without risk of collisions or manual errors. The control unit may be configured to execute also incremental calibration, for example to update the configuration when a single tool station is changed or moved, without altering the position of the tool rack or of the other stations.

Complementarily, the machine can be configured to verify the alignment of the beams by automatically reading the distances provided by a distance sensor of the tool rack when moving the coordinate-measuring probe near the two extremities of one of the beams. Alternatively or complementarily, the alignment and/or the positioning of the tool rack can be determined or verified by measuring positions of reference elements of one or more beam(s) of the tool rack, by processing an image of the rack captured by a camera, or by sensing (by means of the distance sensor) a distance between the tool rack and the coordinate-measuring probe and/or the positioning platform thereof.

### reference symbols in the figures

- 31: upright
- 32: bracket
- 33: circuit board
- 34,34a: beam
- 35: reference feature
- 36: digital scale
- 37: linear guide, track
- 38: power and bus lines
- 50,50a: touch trigger probe
- 51: probe cleaning station
- 71,71a: foot
- 72,72a: foot
- 73: fastener
- 90,90a: tool station
- 91: tool station
- 92: arm
- 93: catch
- 94: connector
- 95: hole
- 96: receptacle
- 98: reader, position transducer
- 99: sliding pins for power and bus lines
- 100,100a: tool rack
- 110: communication and power cable
- 120,120a: interface
- 130,130a: ethernet cable
- 140: Sensor, occupancy sensor
- 150: distance sensor
- 200: coordinate measuring machine
- 220: control unit
- 230: reference table
- 231: threaded hole
- 240: operating volume

## Claims

1. Tool rack (100) for an automatic machine comprising a control unit (220) and a positioning platform (200) connectable to a plurality of tools, the tool rack having a linear guide (37), one tool station or more than one tool stations (90) connected to the linear guide (37) for receiving and/or providing at least one of said plurality of tools in an operating volume (240) of the positioning platform, a position transducer (98) for detecting a position of the tool station or at least one of the tool stations relative to the linear guide (37) and transmitting the position to the control unit (220).

2. The tool rack of the preceding claim, having a digital scale (36) running along an axis of the linear guide (37), wherein the tool station (90) or at least one of the more than one tool stations have a reader (98) configured to read a position from the scale, and a data interface (120) configured to transmit the position to the control unit (220).

3. The tool rack of the previous claim, wherein the digital scale (36) carries a positioning code or an absolute positioning code, defined by a pattern of variations of a quantity that is readable by the reader of the tool station; preferably, said quantity being one of: an electrical conductivity readable by sliding contacts or by a contactless sensor in the reader, a magnetization, a magnetic reluctance, an optical reflectivity or an optical transmissivity.

4. The tool rack of the previous claim, wherein the reader (98) is configured to read two spaced positions along the scale and activate a corrective action when the two positions do not correspond.

5. The tool rack of claim 1, wherein the position is determined through the measure of an electric quantity that change continuously along a sliding axis of the linear guide, or wherein the position transducer comprises a camera for capturing an image of the tool rack and an image processing circuit for processing said image so as to provide a position of said tool station or at least one of the tool stations relative to the linear guide.

6. The tool rack of any one of the preceding claims, wherein the position transducer and/or the reader has a resolution in the determination of the position along the linear guide is better than 5 mm, preferably better than 3 mm, preferably better than 1 mm, or better than 0.3 percent of a length of the linear guide, or preferably better than 0.1 percent of a length of the linear guide.

7. The tool rack of any one of the preceding claims, wherein the tool stations and/or the tool rack have: reference elements (35) that can be positioned in the operating volume by a coordinate measuring probe mounted on the positioning platform, by a camera, and/or by a touch feeler (50) configured to detect a contact with the positioning platform.

8. The tool rack of any one of the preceding claims, wherein the linear guide is in an elongated beam (34) horizontally supported by at least one upright, or by two uprights (31).

9. An automatic machine (200), with a tool rack (100) according to any one of the preceding claims; comprising a reference table for supporting workpieces in the operating volume and a tool rack (100) according to the preceding claim and having two uprights (31), wherein the uprights have each a base with a fastener (73) and the table has a lattice of holes at predetermined positions compatible with the fasteners of the bases of the uprights.

10. A station (90) for holding a probe for an automatic machine, comprising: a mechanical connector (94) configured to connect the station onto a linear guide (36), a position transducer (98) for detecting the position of the tool station (90) relative to the linear guide, and a digital communication interface (110, 120) configured to transmit the position to a digital controller (220).

11. The station of the preceding claim, wherein the position transducer (98) is configured to transmit to the controller (220) also: an identification code designating a type of the station, a unique identifier of the station, an occupancy signal indicating a tool loaded in the tool station, an identification code designating a type of a tool loaded in the tool station, and/or a unique identifier of a tool loaded in the tool station provided by a sensor (140) of the station; preferably, said sensor (140) being further configured to sense and/or collect tool health and/or operational data of a tool loaded in the tool station; preferably, the station further comprising an environmental sensor for sensing an environmental parameter.

12. The station of claim 10 or 11, comprising: an actuator selectively actuatable via commands received by the communication interface for assisting in connecting and disconnecting a tool with a positioning platform of an automatic machine.

13. A method of changing a tool in an automatic machine, with a positioning platform connectable to one of a plurality of tools, comprising:
- providing a tool rack (100) in an operating volume of the machine that is reachable by the positioning platform, the tool rack having a linear guide (36) with at least one tool station (90) connected on the linear guide and a position transducer or a plurality of position transducers (98) for detecting the position of the tool station relative to the linear guide (36) and transmitting the position to the automatic machine,
- acquiring a position of the tool station holding the selected tool,
- moving the positioning platform to the position of the selected tool station, and
- connecting the selected tool to the positioning platform,
wherein said step of acquiring the position of the tool station includes reading said position transducer of the tool rack.

14. The method of the preceding claim, wherein said step of acquiring the position of the selected tool station comprises a calibration operation with the steps of connecting a coordinate-measuring probe to the positioning platform, improving a position of the probe station by determining coordinates of one or more reference elements of the tool station with the coordinate measuring probe; preferably the calibration operation being automatically executed by the automatic machine based on positions read from said position transducer or plurality of position transducers.

15. The method of the preceding claim, comprising determining a position and/or an orientation of the linear guide by measuring positions of reference elements (35) of the tool rack with the coordinate measuring probe, by processing an image of at least a portion of the linear guide captured by a camera, and/or by sensing, by means of a distance sensor (150) of the tool rack, a distance between the tool rack and the coordinate-measuring probe and/or the positioning platform.
